(19) Europäisches Patentamt / European Patent Office / Office européen des brevets

(11) **EP 1 465 447 B1**

(12) **FASCICULE DE BREVET EUROPEEN**

(45) Date de publication et mention
de la délivrance du brevet:
**21.09.2011 Bulletin 2011/38**

(51) Int Cl.:
***H04W 16/18*** *(2009.01)*

(21) Numéro de dépôt: **04290595.0**

(22) Date de dépôt: **05.03.2004**

(54) **Procédé de calcul et de visualisation des interférences mutuelles dans le sens descendant dans un réseau de radiotéléphonie cellulaire à accès de type W-CDMA**

System zur Berechnung und Anzeige der gegenseitigen Interferenz in der Abwärtsverbindung eines W-CDMA Funknetzes

Method for calculating and displaying mutual interference in the downlink for W-CDMA radio networks

(84) Etats contractants désignés:
**AT BE BG CH CY CZ DE DK EE ES FI FR GB GR HU IE IT LI LU MC NL PL PT RO SE SI SK TR**

(30) Priorité: **01.04.2003 FR 0304005**

(43) Date de publication de la demande:
**06.10.2004 Bulletin 2004/41**

(73) Titulaire: **Societé Française du Radiotéléphone**
**75008 Paris (FR)**

(72) Inventeurs:
• **Fattouch, Imad**
**75013 Paris (FR)**
• **Hubert, Jean-Marc**
**78380 Bougival (FR)**
• **Vincent, Francois**
**92140 Clamart (FR)**

(74) Mandataire: **Debay, Yves**
**Cabinet Debay**
**126 Elysée 2**
**78170 La Celle Saint Cloud (FR)**

(56) Documents cités:
**EP-A- 1 098 544     EP-A- 1 292 162**
**WO-A-00/54437     US-A1- 2003 148 782**

• **WACKER A ET AL: "Static simulator for studying WCDMA radio network planning issues" VEHICULAR TECHNOLOGY CONFERENCE, 1999 IEEE 49TH HOUSTON, TX, USA 16-20 MAY 1999, PISCATAWAY, NJ, USA,IEEE, US, 16 mai 1999 (1999-05-16), pages 2436-2440, XP010342261 ISBN: 0-7803-5565-2**
• **MENOLASCINO R ET AL: "STORMS: Software Tools for the Optimisation of Resources in Mobile Systems" ADVANCED COMMUNICATIONS TECHNOLOGIES AND SERVICES, avril 1999 (1999-04), XP002256554**

**Description**

La présente invention concerne le domaine des systèmes de communication de radiotéléphonie mobile. La présente invention concerne plus particulièrement, dans le cadre d'une planification et optimisation d'un réseau de radiotéléphonie cellulaire dont l'interface radio fonctionne suivant un protocole de type W-CDMA (accès multiple à répartition des codes à bande élargie), un procédé permettant de calculer et de visualiser les interférences générées par une cellule ou un groupe de cellules dans le sens descendant. L'invention concerne également un système pour la mise en oeuvre du procédé.

Un réseau radio de type UMTS (système de communication universel avec les mobiles) se distingue notamment du système global avec les mobiles (GSM) par une nouvelle technique d'accès multiple à répartition des codes à bande élargie (AMRC à bande élargie ou W-CDMA). La technique d'accès multiple adoptée pour l'interface radio entre l'équipement d'usager et le Node B constitue un des aspects essentiels des réseaux cellulaires. Le W-CDMA (Wideband Code Distributed Multiple Access) a été choisi en raison des contraintes propres à l'interface radio UMTS : débits variables, qualité de service (QoS) variable, etc. Dans cette technique, plus le nombre de mobiles augmente dans la cellule, plus le niveau de brouillage est élevé. Le W-CDMA est donc un système limité par le bruit. Ce système requiert dès lors un contrôle de puissance.

Contrairement au GSM, chaque station émettrice n'a pas de fréquence propre et la réduction des interférences ne peut être réalisée que par ajustement de la puissance par la station. Pour optimiser ce contrôle de puissance, il est nécessaire d'établir un modèle de prévision des interférences.

Dans l'art antérieur, la méthode dite de Monte Carlo et des méthodes dérivées ont été utilisées pour simuler les interférences. Ce type de méthode consiste à disposer des mobiles sur une carte de manière statistique et ensuite simuler un contrôle de puissance. Les interférences dans le sens montant, c'est-à-dire générées par les mobiles entre eux positionnés sur la carte, peuvent alors être calculées. Toutefois, l'obtention d'un positionnement statistique des mobiles est particulièrement fastidieux car cela nécessite un certain nombre de tirages (tirages de Monte Carlo) et les temps de calcul sont particulièrement longs. La méthode de Monte Carlo peut aussi être utilisée dans le sens descendant, c'est-à-dire des stations vers les mobiles.

Cette méthode peut être adoptée pour une localisation très précise mais peut difficilement être utilisée pour un vaste réseau. De plus, elle ne permet pas d'identifier et d'isoler, dans un groupe de cellules, les cellules les plus interférentes.

Il existe par conséquent un besoin d'une méthode simple, rapide, moins théorique et plus opérationnelle, qui permet d'isoler et d'identifier les cellules interférentes et interférées.

Le document EP 1 465 447 décrit une méthode et un système permettant de planifier et d'évaluer les réseaux radio CDMA en proposant une solution de dimensionnement ne mettant pas en oeuvre la méthode de Monte Carlo. Cependant, ce document permet de dimensionner dans le sens montant des réseaux radio CDMA mais ne donne pas de solutions pour identifier et isoler, dans un groupe de cellules, les cellules les plus interférentes.

Un objet de la présente invention est de supprimer un ou plusieurs des inconvénients de l'art antérieur en proposant une méthode permettant de localiser rapidement les problèmes de fonctionnement dus aux interférences dans le sens descendant.

Le réseau UMTS permet la transmission à débit élevé de fichiers volumineux vers les mobiles, en réponse à des requêtes se présentant sous la forme de petits paquets envoyés dans le sens montant. Il en résulte que le sens descendant est toujours beaucoup plus chargé que le sens montant. Les interférences sont donc plus particulièrement fonction de la puissance fournie dans le sens descendant.

Un autre objet de la présente invention est de calculer et visualiser pour un groupe de cellules dites interférentes, les interférences engendrées sur un autre groupe de cellules, en tenant compte du service, du trafic, de la charge et de la puissance dans le sens descendant de chacune des cellules.

A cet effet, l'invention concerne un procédé de calcul et de visualisation des interférences mutuelles dans le sens descendant générées dans un réseau de radiotéléphonie cellulaire à accès de type W-CDMA, mis en oeuvre à l'aide d'un système informatique comprenant des moyens de mémorisation pour stocker notamment des données représentatives de cartes de couverture du réseau, des moyens d'affichage, des moyens de sélection de cellules du réseau par des moyens interactifs d'interface et un module de calcul, procédé caractérisé en ce qu'il comporte :

- une étape de sélection sur un dispositif d'affichage, par l'intermédiaire des moyens interactifs, d'une représentation d'une zone de travail issue des données de cartes et couverte par un ensemble de cellules,

- une étape de sélection sur les moyens d'affichage par les moyens de sélection de cellules d'un sous-ensemble de cellules considérées comme interférentes, respectivement d'un sous-ensemble de cellules considérées comme interférées, parmi n'importe lesquelles des cellules de l'ensemble couvrant la zone de travail représentée,

- une étape de saisie par les moyens interactifs de niveaux de seuil pour les rapports signal/interférences ainsi que d'au moins un paramètre relatif à la puissance des cellules interférentes, un paramètre pour un canal de trafic que l'on souhaite étudier et un paramètre pour un contour délimitant une zone de calcul dans la zone de travail,

- une étape de détermination par le module de calcul de la zone géographique desservie par le sous-ensemble des cellules interférées dite zone de service, et de représentation de cette zone de service,

- une étape d'estimation par le module de calcul du recouvrement de chacune des cellules interférentes avec la zone de service, pour définir et mémoriser dans les moyens de mémorisation une zone de recouvrement,

- une étape de calcul par le module de calcul, en chaque point ou pixel de la zone de recouvrement, du niveau de champ reçu de la cellule interférente respectivement du niveau de champ reçu de la cellule interférée serveuse pour le pixel considéré.

- une étape de calcul par le module de calcul, en chaque point ou pixel de la zone de recouvrement, du champ interférent qui est la somme des champs reçus de toutes les cellules interférentes,

le module de calcul calculant, pour chaque pixel de la zone de recouvrement, la valeur $I_{0\ voisine}$ du champ d'interférence créé par chacune des cellules interférentes pour le calcul d'une matrice ainsi que la somme des champs créés par toutes les cellules interférentes, à partir de données d'atténuation et de la puissance des cellules fixée en paramètre.

Selon une autre particularité de l'invention, une étape d'estimation d'une valeur représentative du rapport signal/interférences est réalisée pour chaque pixel à partir de données d'atténuation et des paramètres.

Selon une autre particularité de l'invention, les paramètres relatifs au canal de trafic comprennent le débit dans le canal, un rapport signal/interférences cible, et une puissance moyenne par canal.

Selon une autre particularité, la puissance des cellules interférentes est paramétrée pour le cas à interférences maximales, lorsque les cellules interférentes sont desservies par un node B du réseau émettant à pleine puissance.

Selon une autre particularité de l'invention, la puissance des cellules interférentes est paramétrée pour le cas à interférences minimales, avec une émission limitée au canal pilote commun CPICH des stations de base du réseau.

Selon une autre particularité, les niveaux de seuil pour les rapports signal/interférences sont fonctions de données géomarketing, représentatives d'une qualité de service souhaitée, mémorisées dans une mémoire du système informatique.

Selon une autre particularité, une matrice d'interférences est formée par une opération d'intégration sur l'ensemble de la zone de recouvrement de l'ensemble des résultats obtenus pour chaque pixel de la zone de recouvrement, le module de calcul déterminant le taux de brouillage global Tbi/j de chacune des cellules interférées serveuses par les cellules interférentes.

Ainsi, il est facile de sélectionner un nombre limité de stations, par exemple les plus perturbatrices, et on limite donc la puissance de calcul requise, tout en fournissant une bonne précision par le fait que la matrice d'interférences tient mieux compte de la réalité du terrain dans les prévisions de brouillage.

Selon une autre particularité, le rapport $Eb/N_0$ de la puissance moyenne du signal sur la densité spectrale moyenne du bruit est calculé en chaque pixel de la zone de recouvrement par le module de calcul suivant la formule :

$Eb/N_0 = Ec/I_0 +$ gain d'étalement, où $I_0$ est la valeur totale du champ d'interférence avec $I_0 = \Sigma\ I_{0\ voisine} +$ bruit thermique $+ I_{0\ serveuse}$ , Ec est la valeur de la puissance moyenne du signal de la cellule serveuse pour le pixel, $I_{0\ serveuse}$ est la valeur du champ d'interférence de la cellule serveuse et le gain d'étalement correspond à la valeur du débit du canal choisi en paramètre, les valeurs pour Ec et $I_{0\ serveuse}$ étant préalablement déterminées par le module de calcul à partir des données d'atténuation et de la puissance fixée en paramètre pour cette cellule.

Selon une autre particularité, des moyens de comparaison permettent au module de calcul de sélectionner au moins trois cellules interférentes constituant les cellules les plus brouilleuses par comparaison des valeurs de la matrice d'interférences.

Selon une autre particularité, une étape d'affichage en chaque pixel de la valeur du rapport $Eb/N_0$ de la puissance moyenne du signal sur la densité spectrale moyenne du bruit est réalisée pour les cellules interférées de la zone de recouvrement par l'intermédiaire des moyens interactifs d'interface, des sous-zones de perturbation étant identifiées par l'emploi d'une représentation graphique spécifique pour les pixels d'une cellule interférée serveuse dont le rapport $Eb/N_0$ est inférieur à un niveau de seuil de rapport signal/interférences saisi en paramètre pour la cellule interférée serveuse.

Selon une autre particularité, le module de calcul détermine en chaque pixel de la zone de recouvrement le rapport $Eb/N_0$ ou $Ec/I_0$, ce rapport étant comparé en chaque pixel de la zone de service à un seuil indiqué en paramètre de manière à calculer, pour chaque couple cellule interférente - cellule interférée serveuse, une valeur représentative de l'excès de puissance de la cellule interférente, cette valeur étant reportée dans une matrice.

Selon une autre particularité, le module de calcul détermine en chaque pixel de la zone de recouvrement le rapport $Eb/N_0$ ou $Ec/I_0$, ce rapport étant comparé en chaque pixel de la zone de service à un seuil indiqué en paramètre de manière à calculer pour chaque cellule interférée une valeur représentative de la perturbation au sein de la cellule interférée. La valeur de $I_0$ est égale dans ce cas à la somme des interférences générées par les cellules interférentes.

Selon une autre particularité, le résultat de perturbation calculé est utilisé pour réaliser un contrôle de puissance pour au moins la cellule la plus brouilleuse, par modification du diagramme de rayonnement d'une antenne adaptative de la cellule, pour augmenter le rapport signal/interférences dans cette cellule.

Un autre but de l'invention est d'apporter une solution à un ou plusieurs des problèmes rencontrés dans l'art antérieur en définissant un système informatique pour la mise en oeuvre du procédé selon l'invention.

Ce but est atteint par un système informatique de calcul et de visualisation des interférences mutuelles dans le sens descendant générées dans un réseau de radiotéléphonie cellulaire à accès de type W-CDMA pour la mise en oeuvre du procédé selon l'invention, comportant des moyens de mémorisation, des moyens de sélection et un module de calcul, lesdits moyens de mémorisation comportant dans une première mémoire des données représentatives de cartes géographiques découpées en une pluralité de points ou pixels selon le découpage dudit réseau et dans une seconde mémoire des données représentatives d'une couverture radio relative au réseau, le dit système étant caractérisé en ce qu'il comporte :

- des moyens interactifs d'interface entre l'utilisateur et ledit système, reliés aux moyens de sélection pour sélectionner et afficher au moins une zone de travail issue des données de cartes, et couverte par un ensemble de cellules de couverture radio disposées selon une implantation définie par les données de la seconde mémoire,

- des moyens de configuration sélectionnables par les moyens interactifs pour mémoriser dans un fichier de configuration du système, à partir de n'importe lesquelles des cellules de l'ensemble couvrant la zone de travail, un premier sous-ensemble de cellules à considérer comme interférentes et un deuxième sous-ensemble de cellules à considérer comme interférées, les moyens de configuration permettant d'une part la définition de niveaux de seuil pour les rapports signal/interférences ainsi que des paramètres relatifs à la puissance des cellules interférentes, au canal de trafic que l'on souhaite étudier et au contour délimitant une zone de calcul dans la zone de travail, et d'autre part la mémorisation de ces données dans un fichier de configuration,

le module de calcul comprenant des moyens de détermination de la zone de service desservie par le sous-ensemble des cellules interférées, des moyens d'estimation du recouvrement de chacune des cellules interférentes avec la zone de service pour définir et mémoriser dans une mémoire des moyens de mémorisation une zone de recouvrement, et des moyens de calcul en chaque point ou pixel de la zone de recouvrement de l'atténuation de la cellule interférente, respectivement de l'atténuation de la cellule interférée serveuse pour le pixel considéré.

Selon une autre particularité, le module de calcul est relié à des moyens d'extraction des données du fichier de configuration et des données représentatives des atténuations stockées dans une troisième mémoire des moyens de mémorisation, le module de calcul déterminant en chaque pixel de la zone de recouvrement une valeur représentative du rapport signal/interférences à partir des atténuations stockées dans la troisième mémoire et des paramètres du fichier de configuration.

Selon une autre particularité, les moyens interactifs d'interface comprennent des moyens d'afficher en chaque pixel de la zone de recouvrement la valeur représentative du rapport signal/interférences $Eb/N_0$ de la puissance moyenne du signal sur la densité spectrale moyenne du bruit, et des moyens de représenter pour chaque cellule interférée serveuse des sous-zones de perturbation représentés par des pixels spécifiques dont le rapport $Eb/N_0$ est inférieur à un niveau de seuil de rapport signal/interférences saisi en paramètre pour la cellule interférée serveuse.

Selon une autre particularité, le système selon l'invention comporte des moyens de commande à distance pour effectuer un contrôle de puissance dans au moins la cellule interférente engendrant la perturbation la plus étendue, par modification du diagramme de rayonnement d'une antenne adaptative de ladite cellule interférente.

L'invention, avec ses caractéristiques et avantages, ressortira plus clairement à la lecture de la description faite en référence aux dessins annexés donnés à titre d'exemples non limitatifs dans lesquels :

- la figure 1 représente schématiquement le système informatique selon l'invention et une carte de la zone de travail d'un réseau radio à accès W-CDMA avec la visualisation des interférences mutuelles dans le sens descendant calculées par le procédé selon l'invention,

- la figure 2 représente de manière schématique la zone de travail de la figure 1 sélectionnée par l'utilisateur dans un réseau radio de type UMTS,

- la figure 3 représente une matrice de coefficients de perturbation entre cellules, servant de base de données et obtenue à partir de la mise en oeuvre du procédé de l'invention,

- la figure 4 représente un exemple de processus à plusieurs étapes mis en oeuvre dans l'invention pour le calcul d'interférences et la création de cartes de perturbations,

- la figure 5 représente des moyens de configuration permettant d'effectuer la phase de sélection préalable des cellules et de saisir dans un fichier de configuration des données et paramètres nécessaires au processus de calcul selon l'invention.

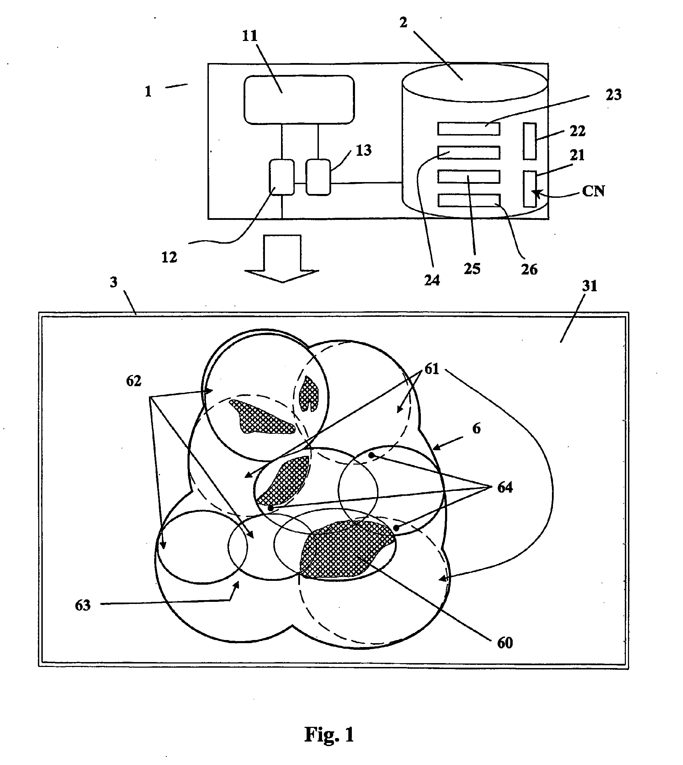

L'invention va à présent être décrite en liaison avec les figures 1, 2 et 5.

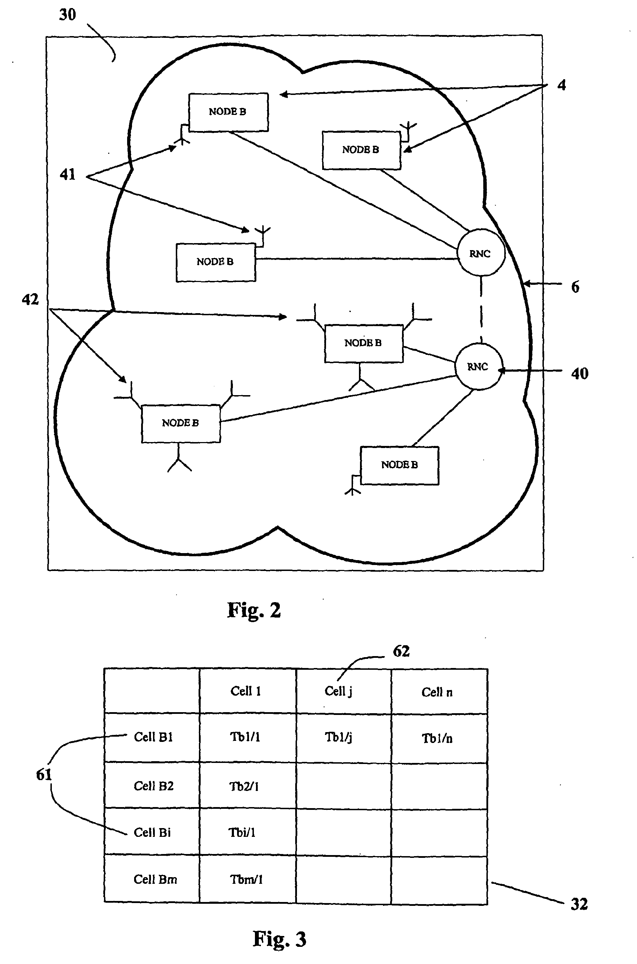

De manière spécifique dans le sens de liaison descendant d'un réseau radio de type UMTS ou de type similaire fonctionnant avec le protocole W-CDMA, tout dispositif de réception et de transmission formé par un Node B (4, figure 2) transmet, par l'intermédiaire d'une antenne (41, 42), un signal sur une bande de fréquence commune à tous les terminaux mobiles des usagers de ce réseau. La figure 2 représente un exemple de portion (30) de réseau d'accès radio de type UMTS que l'utilisateur du système informatique (1) selon l'invention peut sélectionner sur l'affichage du système informatique pour réaliser une étude des interférences mutuelles entre cellules. Comme illustré à la figure 2, un Node B (4) peut être associé par exemple à une antenne (41) omnidirectionnelle ou à au moins une antenne (42) sectorielle émettant dans un seul secteur. Le routage des communications entre le Node B (4) et le coeur du réseau est effectué à l'aide d'éléments (40) RNC (Radio Network Controller). Chacune des antennes (41, 42) en fonctionnement couvre une zone territoriale qui définit une cellule radio au sein de laquelle les équipements d'usagers peuvent communiquer avec le réseau.

Les moyens de mémorisation (2) du système informatique (1) selon l'invention comprennent une première mémoire (21) pour stocker des données représentatives de cartes géographiques représentatives d'un territoire et découpées en une pluralité de points ou pixels selon le découpage du réseau. Les moyens de mémorisation (2) comprennent aussi une seconde mémoire (22) pour stocker des données représentatives d'une couverture radio relative au réseau. Comme illustré à la figure 1, le système (1) dispose d'autres mémoires (23, 24, 25, 26) pour stocker des données ou paramètres nécessaires pour le calcul des interférences. Parmi ces moyens de mémorisation (2), une mémoire (24) permet de mémoriser des données de géomarketing permettant d'affecter un degré variable de qualité de service selon la nature -par exemple ville, axe routier ou campagne- des zones de territoire étudiées. Le système informatique (1) comporte en outre des moyens interactifs d'interface (3) permettant la saisie et l'affichage de données ainsi que des moyens de sélection (12) permettant à l'utilisateur de choisir sur l'affichage notamment une zone de travail (6) couverte par un ensemble de cellules radio du réseau. A partir de cette zone de travail (6) issue des données de cartes représentées sur l'affichage, l'utilisateur choisit un sous-ensemble de cellules (61) que l'on veut considérer comme interférentes et un sous-ensemble de cellules (62) que l'on peut considérer comme interférées.

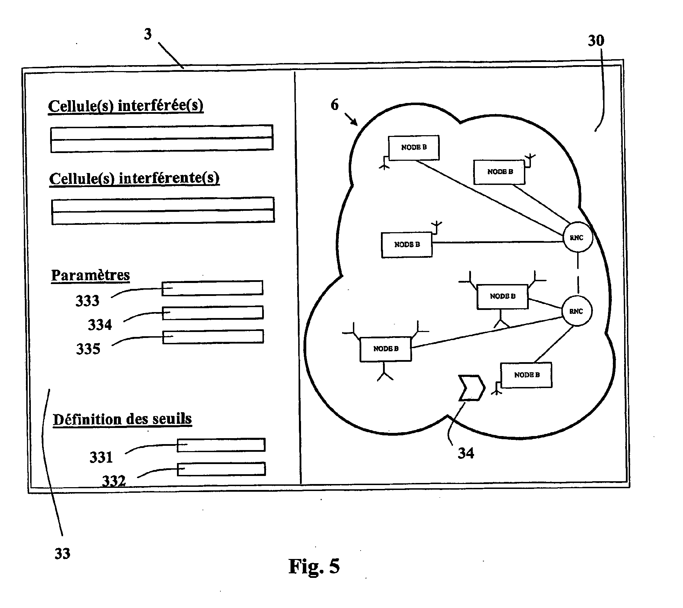

Pour cela, l'utilisateur sélectionne, à l'aide des moyens interactifs (3) et d'un menu, une interface de configuration (33). Dans le mode de réalisation de la figure 5, la sélection de chaque sous-ensemble de cellules peut être réalisée à l'aide d'un indicateur (34) pouvant être déplacé dans la zone de travail (6). Le mode de sélection peut s'effectuer en désignant l'antenne (41, 42) correspondant à la cellule choisie.

Chacun des deux sous-ensembles peut être réduit à un seul Node B (4) ou même à une seule cellule. Le sous-ensemble de cellules interférées et le sous-ensemble de cellules interférentes peuvent avoir des cellules en commun ou même être identiques. Dans un mode de réalisation de l'invention, la sélection s'effectue en mettant par exemple en surbrillance un ensemble de représentations de cellules pris en déplaçant l'indicateur (34) pour l'amener sur une case « cellule interférée » ou « cellule interférente » pour faire apparaître la liste correspondante. L'interface de configuration (33) permet également dans une zone fenêtre de l'affichage la saisie de niveaux de seuil, par exemple (331) pour cellules interférentes (61) et (332) pour cellules interférées (62), pour les rapports signal/interférences ainsi que de paramètres relatifs à la puissance des cellules interférentes (333), au canal de trafic (334) que l'on souhaite étudier et au contour (335) délimitant une zone de calcul dans la zone de travail. Des paramètres de calcul supplémentaires peuvent être envisagés. L'ensemble des données saisies par l'intermédiaire de l'interface de configuration (33) est stocké dans les moyens de mémorisation (2) du système informatique (1), dans un fichier de configuration (25).

Parmi les paramètres à définir dans le fichier de configuration (25), l'utilisateur doit notamment préciser si le canal pris en compte dans la modélisation est le canal pilote commun CPICH (de l'anglais Common Pilot CHannel) ou un autre canal de trafic des stations de base du réseau, destiné à la voix ou au téléchargement de données à des débits déterminés. En variante, il est possible de prendre en compte au moins un canal d'usager pour lequel la puissance est paramétrée. Le sens de communication à considérer dans le processus de l'invention reste toujours le sens de liaison descendant d'un noeud de transmission Node B (4) vers le terminal ou « downlink ». L'interface de configuration (33) permet de définir pour le canal considéré un débit, une valeur cible du rapport signal à interférence $Eb/N_0$ et une puissance moyenne. Un autre paramètre à saisir est la puissance affectée aux cellules interférentes. On peut considérer le cas extrême où le Node B (4) émet à pleine puissance sur tous les canaux de transmission ou le cas opposé avec le seul canal CPICH ou encore un cas moyen. Le cas moyen est par exemple obtenu à partir de simulations ou à partir d'indicateurs d'un centre OMC de supervision des équipements. Dans un mode de réalisation de l'invention, le contour de la zone de calcul peut également être défini par l'utilisateur. Il est ainsi possible pour l'utilisateur, à l'aide de l'indicateur ou un moyen de sélection équivalent, d'éliminer de la zone de travail (6) des zones géographiques peu significatives telles que les surfaces aquatiques et les parcs par exemple.

L'interface de configuration (33) propose en outre, en fonction du canal saisi en paramètre, différents seuils d'Eb/$N_0$ que l'utilisateur peut adapter. Ces seuils, stockés dans le fichier de configuration (25), sont choisis pour garantir différents niveaux de qualité de service. De tels seuils peuvent être adaptés en fonction des données géomarketing correspondant à une qualité de service souhaitée, en fonction des recommandations issues d'études, simulations et mesures terrain.

Une fois les données et paramètres de calcul saisis, le système informatique (1) peut procéder à la phase de calcul. Le système (1) dispose d'un module de calcul (11) comprenant des moyens de détermination de la zone de service (63) desservie par le sous-ensemble des cellules interférées (62). Dans un mode de réalisation de l'invention, cette zone de service (63) est incluse dans la zone de calcul définie par l'utilisateur. Le module de calcul (11) comprend également des moyens d'estimation du recouvrement de chacune des cellules interférentes (61) avec la zone de service (63) pour définir et mémoriser dans une mémoire (23) des moyens de mémorisation (2) une zone de recouvrement (64) globale. Cette zone de recouvrement (64) globale entre cellules interférentes (61) et zone de service (63) peut comporter par exemple plusieurs zones distinctes de recouvrement, comme illustré à la figure 1. Dans ce qui suit, on entend par zone de recouvrement (64) l'ensemble des surfaces constituées des zones de recouvrement distinctes entre cellules interférentes (61) et cellules appartenant à la zone de service (63). Le calcul de ce recouvrement est réalisé en tenant compte des paramètres de calcul stockés dans le fichier de configuration (25).

Le découpage en pixels des cartes, issu de données de carte numérique (CN) stockées dans la première mémoire (21) des moyens de mémorisation (2), permet de distinguer très localement les problèmes d'interférences. Un pixel peut par exemple correspondre à une surface inférieure à 0,5 km$^2$. Dans des variantes de réalisation, la carte numérique (CN) spécifie notamment les reliefs naturels et artificiels, ainsi que leur nature, telle que forêt, immeubles et autres, ce qui permet de calculer une estimation de l'atténuation radio de la liaison affectée par les reliefs. Le module de calcul (11) du système (1) comporte des moyens de calcul en chaque pixel de la zone de recouvrement (64) de l'atténuation de la cellule interférente (61), respectivement de l'atténuation de la cellule interférée serveuse pour le pixel considéré. L'atténuation est le résultat de calcul par des modèles de propagation radio. Dans le cas de la construction d'une matrice pour visualiser les interférences, le niveau de champ interférent est celui de chaque cellule interférente (61), ce niveau de champ étant notamment déterminé en tenant compte de données puissance - atténuation. Dans le cas d'une visualisation globale sur une zone sélectionnée, le champ interférent est la somme des niveaux de champ reçu de toutes les cellules interférentes (61). Des données représentatives des atténuations ainsi calculées sont stockées dans une troisième mémoire (26) des moyens de mémorisation (2).

Dans un mode de réalisation de l'invention, le module de calcul (11), relié à des moyens d'extraction (13) des données du fichier de configuration (25) et des données représentatives des atténuations calculées, permet de déterminer en chaque pixel de la zone de recouvrement (64) une valeur représentative du rapport signal à interférences à partir des atténuations stockées dans la troisième mémoire (26) et des paramètres du fichier de configuration (25). Le rapport signal/interférences Eb/$N_0$ de la puissance moyenne du signal sur la densité spectrale moyenne du bruit et le rapport Ec/$I_0$ de la puissance moyenne du signal émis par la cellule interférente sur le bruit sont par exemple calculés par le module de calcul pour chaque pixel de la zone de recouvrement (64) à partir des atténuations respectives dans chaque pixel, du canal défini en paramètre et de son débit qui représente le gain d'étalement, la puissance moyenne du canal, et à partir de la puissance de la cellule interférente (61). Le rapport Eb/$N_0$ ou Ec/$I_0$ peut être comparé en chaque pixel de la zone de service (63) à un seuil indiqué en paramètre de manière à calculer pour chaque cellule interférée (62) une valeur représentative de la perturbation au sein de la cellule interférée. En variante, cette comparaison peut être réalisée uniquement dans la zone de recouvrement (64).

Les moyens interactifs (3) d'interface comprennent des moyens d'afficher en chaque pixel de la zone de recouvrement (64) la valeur représentative du rapport signal/interférences Eb/$N_0$ de la puissance moyenne du signal sur la densité spectrale moyenne du bruit. Comme représenté à la figure 1, les moyens interactifs (3) d'interface comportent également des moyens de représenter les cellules interférées (62) serveuses des sous-zones (60) de perturbation par des pixels spécifiques dont le rapport Eb/$N_0$ est inférieur à un niveau de seuil de rapport signal/interférences saisi en paramètre pour la cellule interférée (62) serveuse. La représentation graphique des pixels des sous-zones (60) de perturbation consiste par exemple en un type de couleur ou de dégradé différent, comme représenté sur la carte (31) des perturbations par brouillage de la figure 1.

Dans un mode de réalisation de l'invention, le module de calcul (11) détermine, pour chaque pixel de la zone de recouvrement (64), la valeur $I_{0\text{ voisine}}$ du champ d'interférence créé par chacune des cellules interférentes (61), à partir des atténuations et de la puissance des cellules fixées en paramètre. Le rapport Eb/$N_0$ de la puissance moyenne du signal sur la densité spectrale moyenne du bruit est alors calculé en chaque pixel de la zone de recouvrement (64) par le module de calcul (11) suivant la formule :

$$Eb/N_0 = Ec/I_0 + \text{gain d'étalement,}$$

où $I_0$ est la valeur totale du champ d'interférence avec $I_0 = \Sigma\ I_{0\ voisine}$ + bruit thermique + $I_{0\ serveuse}$ , Ec est la valeur de la puissance moyenne du signal de la cellule serveuse pour le pixel, $I_{0\ serveuse}$ est la valeur du champ d'interférence de la cellule serveuse et le gain d'étalement correspond à la valeur du débit du canal choisi en paramètre, les valeurs pour Ec et $I_{0\ serveuse}$ étant préalablement déterminées par le module de calcul (11) à partir des données d'atténuation stockées dans la troisième mémoire (26) et de la puissance fixée en paramètre pour cette cellule serveuse.

L'invention va à présent être décrite en liaison avec les figures 1, 3 et 4.

Dans le mode de réalisation de la figure 3, une matrice (32) dite d'interférences est formée par une opération d'intégration sur l'ensemble de la zone de recouvrement (64). Les statistiques calculées pour chaque couple de cellules interférente (61) / interférée (62) serveuse peuvent en effet être présentées de manière matricielle. Le module de calcul (11) détermine le taux de brouillage global Tbi/j de chacune des cellules interférées (62) serveuses par les cellules interférentes (61). Ce taux Tbi/j est positionné dans le tableau matriciel représenté à la figure 3, à l'intersection de la colonne correspondant à la cellule interférée (62) et de la ligne correspondant à la cellule interférente (61). Les taux de brouillage, appelés également coefficients de perturbation, peuvent être stockés dans les moyens de mémorisation (2) et servir de base de données.

Pour former une telle matrice (32), le module de calcul détermine par exemple en chaque pixel de la zone de recouvrement (64) le rapport $Eb/N_0$ ou $Ec/I_0$, puis ce rapport est comparé en chaque pixel de la zone de service (63) à un seuil indiqué en paramètre par l'utilisateur de manière à calculer pour chaque couple cellule interférente (61) - cellule interférée (62) serveuse une valeur représentative de l'excès de puissance de la cellule interférente (61), obtenue par exemple par simple différence entre la valeur atteinte pour et la valeur seuil d'$Eb/N_0$ entrée par l'utilisateur comme paramètre. Dans un mode de réalisation de l'invention, la valeur représentative du taux de brouillage Tbi/j est reportée dans la matrice (32). L'utilisation de telles matrices (32) à coefficients de perturbation permet d'orienter facilement les décisions dans le cadre de la réduction des interférences et de l'optimisation d'un réseau UMTS. De plus il est facile de hiérarchiser les actions en agissant de manière prioritaire sur les antennes (61, 62) des sites engendrant le plus de brouillage. Dans un mode de réalisation de l'invention, le module de calcul (11) peut sélectionner au moins trois cellules interférentes (61) constituant les cellules brouilleuses les plus perturbatrices par comparaison des valeurs de la matrice (32) à coefficients de perturbation.

Les antennes (61, 62) utilisées pour former les cellules radio du réseau UMTS sont par exemple des antennes adaptatives, dont le diagramme de rayonnement peut être ajusté. Afin de contrôler directement la puissance des antennes (61, 62) générant un brouillage trop important, le système informatique (1) selon l'invention peut comporter des moyens de commande à distance (non représenté) permettant de modifier le diagramme de rayonnement d'une antenne adaptative, pour augmenter le rapport signal/interférences dans la cellule généré par l'antenne. Un tel ajustement de puissance peut s'effectuer dans au moins la cellule interférente engendrant la perturbation la plus étendue. Dans un mode de réalisation de l'invention, chacune des antennes (61, 62) correspondant à une des cellules interférentes (61) les plus perturbatrices pourra être réglée de manière automatique. Ceci est par exemple envisageable par commande à distance d'une molette ou autre élément motorisé déphasant des dipôles de l'antenne.

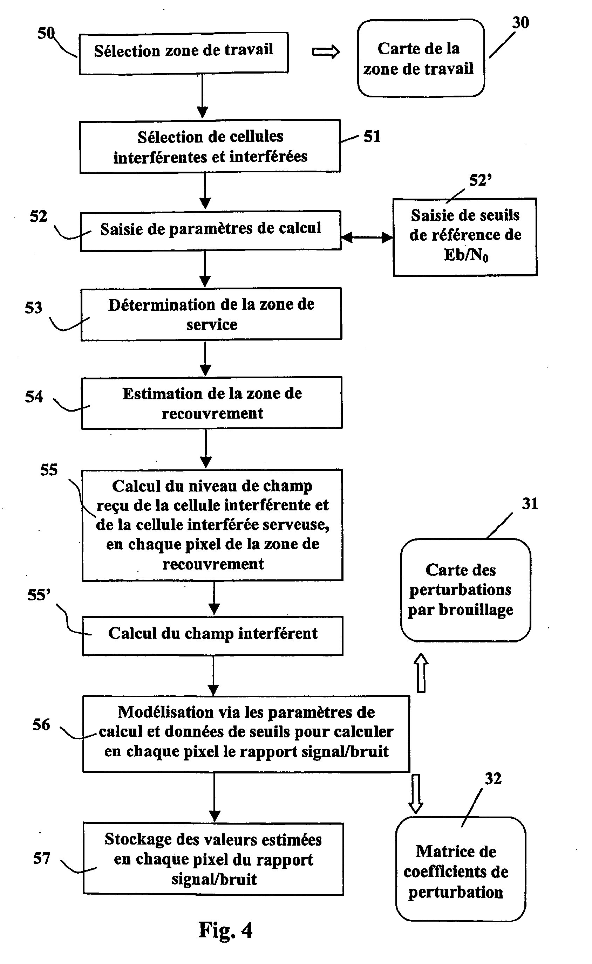

La figure 4 récapitule différentes phases du processus selon l'invention. Ainsi, on comprend que l'étape préalable (50) de sélection de la zone de travail (6) permet de visualiser, par l'intermédiaire des moyens interactifs (3), une carte (30) de la zone de travail. Le processus se poursuit par une étape (51) de sélection des cellules interférentes (61) et interférées (62). Cette étape (51) permet éventuellement de se restreindre à un nombre très limité de cellules interférentes (61). Il s'ensuit l'étape de saisie (52) de paramètres de calcul et de saisie (52') de seuils de référence de Eb$/N_0$ pour notamment adapter la qualité de la communication en fonction de l'importance d'un point de vue marketing d'une zone étudiée. Puis vient une étape (53) de détermination de la zone de service (63) par le module de calcul (11) et de représentation de cette zone de service (63). Dès lors, une étape (54) d'estimation de la zone de recouvrement (64) et une étape (55) de calcul des niveaux de champ reçu des cellules sélectionnées sont réalisées par le module de calcul (11). Le champ interférent, qui est la somme des champs reçus de toutes les cellules interférentes (61), est également calculé au cours d'une étape supplémentaire (55').

Une étape (56) de modélisation peut ensuite être effectuée par le module de calcul (11) pour déterminer en chaque point de la zone de recouvrement (64) le rapport signal/bruit. Le système (1) selon l'invention permet de former, en tenant compte de la modélisation susmentionnée, une carte (31) des perturbations par brouillage pour visualiser directement les interférences. De manière analogue, le système permet de former une matrice des coefficients de perturbation qui peut être facilement exploitée en vue d'optimiser le réseau radio UMTS. Les données représentatives des valeurs du rapport signal/bruit pour chaque pixel de la zone de recouvrement (64) sont stockées dans les moyens de mémorisation (2) lors d'une étape (57) de stockage.

Un des avantages du procédé selon l'invention est la prise en compte d'un minimum d'hypothèses et la simplicité de calcul par rapport aux méthodes existantes nécessitant des échantillonnages. L'invention permet de minimiser les erreurs d'estimation, tout en détectant très rapidement les cellules interférentes à fort taux de brouillage. Le procédé offre donc la possibilité d'agir en priorité sur les « points noirs » d'un réseau dont l'interface radio fonctionne selon le protocole W-CDMA.

Un avantage supplémentaire de l'invention est de donner un aspect plus opérationnel à l'impact d'une mauvaise ingénierie ou planification. De plus, cette méthode permet par exemple une optimisation d'un réseau radio UMTS ou équivalent tout au long de son évolution.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de calcul et de visualisation des interférences mutuelles dans le sens descendant générées dans un réseau de radiotéléphonie cellulaire à accès de type W-CDMA, mis en oeuvre à l'aide d'un système informatique (1) comprenant des moyens de mémorisation (2) pour stocker notamment des données représentatives de cartes (CN) de couverture du réseau, des moyens d'affichage, des moyens de sélection (34) de cellules du réseau par des moyens interactifs d'interface (3) et un module de calcul (11), dans lequel :

    - une étape (50) de sélection par l'intermédiaire des moyens interactifs (3) sur un dispositif d'affichage d'une représentation d'une zone de travail (6) issue des données de cartes (CN) et couverte par un ensemble de cellules,
    - une étape (51) de sélection sur les moyens d'affichage par les moyens de sélection (34) de cellules d'un sous-ensemble de cellules (61) considérées comme interférentes, respectivement d'un sous-ensemble de cellules (62) considérées comme interférées, parmi n'importe lesquelles des cellules de l'ensemble couvrant la zone de travail (6) représentée,
    - une étape de saisie (52, 52') par les moyens de configuration (33) de niveaux de seuil pour les rapports signal/interférences ainsi que d'au moins un paramètre relatif à la puissance des cellules interférentes (61), un paramètre pour un canal de trafic que l'on souhaite étudier et un paramètre pour un contour délimitant une zone de calcul dans la zone de travail (6),
    - une étape (53) de détermination par le module de calcul (11) de la zone géographique desservie par le sous-ensemble des cellules interférées (61) dite zone de service (63), et de représentation de cette zone de service (63),
    - une étape (54) d'estimation par le module de calcul du recouvrement de chacune des cellules interférentes (61) avec la zone de service (63), pour définir et mémoriser dans les moyens de mémorisation (2) une zone de recouvrement (64),
    - une étape (55) de calcul par le module de calcul (11), en chaque point ou pixel de la zone de recouvrement (64), du niveau de champ reçu de la cellule interférente (61), respectivement du niveau de champ reçu de la cellule interférée (62) serveuse pour le pixel considéré,
    - une étape de calcul (55') par le module de calcul (11), en chaque point ou pixel de la zone de recouvrement (64), du champ interférent qui est la somme des champs reçus de toutes les cellules interférentes (61),

le module de calcul calculant, pour chaque pixel de la zone de recouvrement, la valeur $I_{0\ voisine}$ du champ d'interférence créé par chacune des cellules interférentes pour le calcul d'une matrice ainsi que la somme des champs créés par toutes les cellules interférentes, à partir de données d'atténuation et de la puissance des cellules fixée en paramètre.

2. Procédé selon la revendication 1, dans lequel une étape (56) d'estimation d'une valeur représentative du rapport signal/interférences est réalisée pour chaque pixel à partir des niveaux de champ et des paramètres

3. Procédé selon la revendication 1 ou 2, dans lequel les paramètres relatifs au canal de trafic comprennent le débit dans le canal, un rapport signal/interférences cible, et une puissance moyenne par canal.

**4.** Procédé selon l'une quelconque des revendications 1 à 3, dans lequel la puissance des cellules interférentes (61) est paramétrée pour le cas à interférences maximales, lorsque les cellules interférentes sont desservies par un node B (4) du réseau émettant à pleine puissance.

**5.** Procédé selon l'une quelconque des revendications 1 à 3, dans lequel la puissance des cellules interférentes (61) est paramétrée pour le cas à interférences minimales, avec une émission limitée au canal pilote commun CPICH des stations de base du réseau.

**6.** Procédé selon l'une quelconque des revendications 1 à 5, dans lequel les niveaux de seuil pour les rapports signal/interférences sont fonctions de données géomarketing, représentatives d'une qualité de service souhaitée, mémorisées dans une mémoire (24) du système informatique (1).

**7.** Procédé selon l'une quelconque des revendications 2 à 6, dans lequel une matrice d'interférences (31) est formée par une opération d'intégration sur l'ensemble de la zone de recouvrement (64) de l'ensemble des résultats obtenus pour chaque pixel de la zone de recouvrement (64), le module de calcul (11) déterminant le taux de brouillage global $Tbi/j$ de chacune des cellules interférées (62) serveuses par les cellules interférentes (61).

**8.** Procédé selon l'une quelconque des revendications 1 à 7, dans lequel le rapport $Eb/N_0$ de la puissance moyenne du signal sur la densité spectrale moyenne du bruit est calculé en chaque pixel de la zone de recouvrement (64) par le module de calcul (11) suivant la formule:

$$Eb/N_0 = Ec/I_0 + \text{gain d'étalement,}$$

où $I_0$ est la valeur totale du champ d'interférence avec $I_0 = \Sigma\ I_{0\ voisine} + \text{bruit thermique} + I_{0\ serveuse}$, Ec est la valeur de la puissance moyenne du signal de la cellule serveuse pour le pixel, $I_{0\ serveuse}$ est la valeur du champ d'interférence de la cellule serveuse et le gain d'étalement correspond à la valeur du débit du canal choisi en paramètre, les valeurs pour Ec et $I_{0\ serveuse}$ étant préalablement déterminées par le module de calcul (11) à partir des données d'atténuation et de la puissance fixée en paramètre pour cette cellule.

**9.** Procédé selon l'une quelconque des revendications 7 à 8, dans lequel des moyens de comparaison permettent au module de calcul (11) de sélectionner au moins trois cellules interférentes (61) constituant les cellules les plus brouilleuses par comparaison des valeurs de la matrice d'interférences (31).

**10.** Procédé selon l'une quelconque des revendications 8 ou 9, dans lequel une étape d'affichage en chaque pixel de la valeur du rapport $Eb/N_0$ de la puissance moyenne du signal sur la densité spectrale moyenne du bruit est réalisée pour les cellules interférées (62) de la zone de recouvrement (64) par l'intermédiaire des moyens interactifs (3) d'interface, des sous-zones (60) de perturbation étant identifiées par l'emploi d'une représentation graphique spécifique pour les pixels d'une cellule interférée (62) serveuse dont le rapport $Eb/N_0$ est inférieur à un niveau de seuil de rapport signal/interférences saisi en paramètre pour la cellule interférée (62) serveuse.

**11.** Procédé selon l'une quelconque des revendications 8 à 10, dans lequel le module de calcul (11) détermine en chaque pixel de la zone de recouvrement (64) le rapport $Eb/N_0$ ou $Ec/I_0$, ce rapport étant comparé en chaque pixel de la zone de service (63) à un seuil indiqué en paramètre de manière à calculer pour chaque couple cellule interférente (61) - cellule interférée (62) serveuse une valeur représentative de l'excès de puissance de la cellule interférente (61), cette valeur étant reportée dans une matrice.

**12.** Procédé selon l'une quelconque des revendications 8 à 10, dans lequel le module de calcul (11) détermine en chaque pixel de la zone de recouvrement (64) le rapport $Eb/N_0$ ou $Ec/I_0$, ce rapport étant comparé en chaque pixel de la zone de service (63) à un seuil indiqué en paramètre de manière à calculer pour chaque cellule interférée (61) une valeur représentative de la perturbation au sein de la cellule interférée (61), la valeur de $I_0$ étant égale à la somme des interférences générées par les cellules interférentes.

**13.** Procédé selon l'une quelconque des revendications 9 à 12, dans lequel le résultat de perturbation calculé est utilisé pour réaliser un contrôle de puissance pour au moins la cellule la plus brouilleuse, par modification du diagramme de rayonnement d'une antenne adaptative de la cellule, pour augmenter le rapport signal/interférences dans cette cellule.

**14.** Système informatique (1) de calcul et de visualisation des interférences mutuelles dans le sens descendant générées dans un réseau de radiotéléphonie cellulaire à accès de type W-CDMA pour la mise en oeuvre du procédé selon l'une quelconque des revendications 1 à 13, comportant des moyens de mémorisation (2), un module de calcul (11) et des moyens de sélection (12), lesdits moyens de mémorisation (2) comportant dans une première mémoire (21) des données représentatives de cartes (CN) géographiques découpées en une pluralité de points ou pixels selon le découpage dudit réseau et dans une seconde mémoire (22) des données représentatives d'une couverture radio relative au réseau, le dit système (1) étant **caractérisé en ce qu'**il comporte :

- des moyens interactifs (3) d'interface entre l'utilisateur et ledit système (1), reliés aux moyens de sélection (12) pour sélectionner et afficher au moins une zone de travail (6) issue des données de cartes (CN), et couverte par un ensemble de cellules de couverture radio disposées selon une implantation définie par les données de la seconde mémoire (22),
- des moyens de configuration (33, 34) sélectionnables par les moyens interactifs (3) pour mémoriser dans un fichier de configuration (25) du système (1), à partir de n'importe lesquelles des cellules de l'ensemble couvrant la zone de travail (6), un premier sous-ensemble de cellules (61) à considérer comme interférentes et un deuxième sous-ensemble de cellules (62) à considérer comme interférées, les moyens de configuration (33) permettant d'une part la définition de niveaux de seuil pour les rapports signal/interférences ainsi que des paramètres relatifs à la puissance des cellules interférentes (61), au canal de trafic que l'on souhaite étudier et au contour délimitant une zone de calcul dans la zone de travail (6), et d'autre part la mémorisation de ces données dans un fichier de configuration (25),le module de calcul (11) comprenant des moyens de détermination de la zone de service (63) desservie par le sous-ensemble des cellules interférées (62), des moyens d'estimation du recouvrement de chacune des cellules interférentes (61) avec la zone de service (63) pour définir et mémoriser dans une mémoire (23) des moyens de mémorisation (2) une zone de recouvrement (64), et des moyens de calcul en chaque point ou pixel de la zone de recouvrement (64) de l'atténuation de la cellule interférente (61), respectivement de l'atténuation de la cellule interférée (62) serveuse pour le pixel considéré.

**15.** Système selon la revendication 14, dans lequel le module de calcul (11) est relié à des moyens d'extraction (13) des données du fichier de configuration (25) et des données représentatives des atténuations stockées dans une troisième mémoire (26) des moyens de mémorisation (2), le module de calcul (11) déterminant en chaque pixel de la zone de recouvrement (64) une valeur représentative du rapport signal/interférences à partir des atténuations stockées dans la troisième mémoire (26) et des paramètres du fichier de configuration (25).

**16.** Système selon la revendication 14 ou 15, dans lequel les moyens interactifs (3) d'interface comprennent des moyens d'afficher en chaque pixel de la zone de recouvrement (64) la valeur représentative du rapport signal/interférences $Eb/N_0$ de la puissance moyenne du signal sur la densité spectrale moyenne du bruit, et des moyens de représenter pour chaque cellule interférée (61) serveuse des sous-zones (60) de perturbation représentés par des pixels spécifiques dont le rapport $Eb/N_0$ est inférieur à un niveau de seuil de rapport signal/interférences saisi en paramètre pour la cellule interférée (62) serveuse.

**17.** Système selon l'une quelconque des revendications 14 à 16, **caractérisé en ce qu'**il comporte des moyens de commande à distance pour effectuer un contrôle de puissance dans au moins la cellule interférente (61) engendrant la perturbation la plus étendue, par modification du diagramme de rayonnement d'une antenne adaptative de ladite cellule interférente (61).

**Claims**

**1.** A process for calculating and displaying mutual interference in the descending direction generated in a cellular radiotelephony network with access of W-CDMA type, executed by means of a computer system (1) comprising memory means (2) for storing data especially representative of network coverage maps (CN), display means, selection means (34) for selecting cells of the network by interactive interface means (3) and a calculation module (11), a process **characterised in that** it comprises:

- a selection step (50) by means of interactive means (3) on a display device of a representation of a work zone (6) originating from map data (CN) and covered by a set of cells,
- a selection step (51) on the display means by the selection means (34) of cells of a subset of cells (61) considered to be interfering, respectively of a subset of cells (62) considered to be interfered, from among any of the cells of the set covering the work zone (6) illustrated,

- an input step (52, 52') by the configuration means (33) of threshold levels for the signal/interference ratios as well as at least one parameter relative to the power of the interfering cells (61), a parameter for a traffic channel to be studied and a parameter for a contour delimiting a calculation zone in the work zone (6),
- a determination step (53) by the calculation module (11) of the geographic zone served by the subset of the interfered cells (61) known as service zone (63), and representation of this service zone (63),
- an estimation step (54) by the calculation module of the covering of each of the interfering cells (61) with the service zone (63), to define and store in the memory means (2) a covering zone (64),
- a calculation step (55) by the calculation module (11), at each point or pixel of the covering zone (64), of the received field level of the interfering cell (61), respectively of the received field level of the interfered cell (62) server for the relevant pixel,
- a calculation step (55') by the calculation module (11) at each point or pixel of the covering zone (64), of the interfering field which is the sum of the fields received from all the interfering cells (61),
the calculating mode calculating, for each pixel of the covering zone, the adjacent value $I_{0adjacent}$ of the interference field created by each of the interfering cells for calculating a matrix, as well as the sum of the fields created by all the interfering cells from attenuation data and the power of the cells fixed as a parameter.

2.  The process as claimed in Claim 1, in which an estimation step (56) of a value representative of the signal/interference ratio is taken for each pixel from the field and parameter levels.

3.  The process as claimed in Claim 1 or 2, in which the parameters relative to the traffic channel comprise the flow in the channel, a signal/interference ratio target and average power per channel.

4.  The process as claimed in any one of Claims 1 to 3, in which the power of the interfering cells (61) is parametered for the case of maximal interference, when the interfering cells are served by a node B (4) of the network emitting at full power.

5.  The process as claimed in any one of Claims 1 to 3, in which the power of the interfering cells (61) is parametered for the case of minimal interferences, with emission limited to the controlled channel common CPICH of the base stations of the network.

6.  The process as claimed in any one of Claims 1 to 5, in which the threshold levels for the signal/interference ratios are functions of geomarketing data, representative of a preferred service quality, stored in memory (24) of the computer system (1).

7.  The process as claimed in any one of Claims 2 to 6, in which an interference matrix (31) is formed by an integration operation over the entire covering zone (64) of the set of results obtained for each pixel of the covering zone (64), the calculation module (11) determining the overall jamming rate of Tbi/j of each of the interfered server cells (62) by the interfering cells (61).

8.  The process as claimed in any one of Claims 1 to 7, in which the $Eb/N_0$ ratio of the average power of the signal on the average spectral density of the noise is calculated in each pixel of the covering zone (64) by the calculation module (11) according to the formula:

$$Eb/N_0 = Ec/I_0 + \text{spread gain,}$$

where $I_0$ is the total value of the interference field with $I_0 = \Sigma\ I_{0adjacent} + \text{thermal noise} + I_{0server}$, Ec is the value of the average power of the signal of the server cell for the pixel, $I_{0server}$ is the value of the interference field of the server cell and the spread gain corresponds to the value of the flow of the channel selected as a parameter, the values for Ec and $I_{0sever}$ being previously determined by the calculation module (11) from attenuation data and the power fixed as a parameter for this cell.

9.  The process as claimed in any one of Claims 7 to 8, in which comparison means enable the calculation module (11) to select at least three interfering cells (61) constituting the most jammed cells by comparison to the values of the interference matrix (31).

10. The process as claimed in any one of Claims 8 or 9, in which a display step in each pixel of the value of the $Eb/N_0$

ratio of the average power of the signal on the average spectral density of the noise is taken for the interfered cells (62) of the covering zone (64) by means of interactive interface means (3), perturbation sub-zones (60) being identified by using a specific graphic representation for the pixels of an interfered server cell (62) whereof the $Eb/N_0$ ratio is less than a threshold level of signal/interference ratio input as a parameter for the interfered server cell (62).

11. The process as claimed in any one of Claims 8 to 10, in which the calculation module (11) determines in each pixel of the covering zone (64) the $Eb/N_0$ or $Ec/I_0$ ratio, this ratio being compared in each pixel of the service zone (63) to a threshold indicated as a parameter so as to calculate for each interfering cell (61) - interfered server cell (62) pair a value representative of the excess of power of the interfering cell (61), this value being transferred to a matrix.

12. The process as claimed in any one of Claims 8 to 10, in which the calculation module (11) determines in each pixel of the covering zone (64) the $Eb/N_0$ ratio or $Ec/I_0$, this ratio being compared in each pixel of the service zone (63) to a threshold indicated as a parameter so as to calculate for each interfered cell (61) a value representative of the perturbation within the interfered cell (61), the value of $I_0$ being equal to the sum of interference generated by the interfering cells.

13. The process as claimed in any one of Claims 9 to 12, in which the calculated perturbation result is utilised to carry out a power check for at least the most disturbing cell, by modification of the radiation diagram of an adaptive antenna of the cell, to boost the signal/interference ratio in this cell.

14. Computer system (1) for calculating and displaying mutual interferences in the descending direction generated in a cellular radiotelephony network with access of W-CDMA type for executing the process as claimed in any one of Claims 1 to 13, comprising memory means (2), a calculation module (11) and selection means (12), said memory means (2) comprising in a first memory (21) data representative of geographic maps (CN) cut out into a plurality of points or pixels according to the cutting of said network and in a second memory (22) comprising data representative of a coverage radio relative to the network, said system (1) being **characterised in that** it comprises:

   - interactive interface means (3) between the user and said system (1) connected to the selection means (12) for selecting and displaying at least one work zone (6) originating from the map data (CN), and covered by a set of radio coverage cells arranged according to implantation defined by the data of the second memory (22),
   - configuration means (33, 34) selectable by the interactive means (3) for storing in a configuration file (25) of the system (1), from any of the cells of the set covering the work zone (6), a first subset of cells (61) to be considered as interfering and a second subset of cells (62) to be considered as interfered, the configuration means (33) allowing both the definition of threshold levels for the signal/interference ratios as well as parameters relative to the power of the interfering cells (61), to the traffic channel to be studied and to the contour delimiting a calculation zone in the work zone (6), and also storing of these data in a configuration file (25), the calculation module (11) comprising determination means of the service zone (63) served by the subset of interfered cells (62), estimation means of the covering of each of the interfering cells (61) with the service zone (63) to define and store in memory (23) of the memory means (2) a covering zone (64), and calculation in each point or pixel of the covering zone (64) of the attenuation of the interfering cell (61), respectively of the attenuation of the interfered server cell (62) for the relevant pixel.

15. The system as claimed in Claim 14, in which the calculation module (11) is connected to data extraction means (13) of the configuration file (25) and data representative of the attenuations stored in a third memory (26) of the memory means (2), the calculation module (11) determining in each pixel of the covering zone (64) a value representative of the signal/interference ratio from attenuations stored in the third memory (26) and parameters of the configuration file (25).

16. The system as claimed in Claim 14 or 15, in which the interactive interface means (3) comprise means for displaying in each pixel of the covering zone (64) the value representative of the signal/interference $Eb/N_0$ ratio of the average power of the signal on the average spectral density of the noise, and means for representing for each interfered server cell (61) sub-zones (60) of perturbation represented by specific pixels whereof the $Eb/N_0$ ratio is less than a threshold level of signal/interference ratio input as a parameter for the interfered server cell (62).

17. The system as claimed in any one of Claims 14 to 16, **characterised in that** it comprises remote control means for carrying out a power check in at least the interfering cell (61) engendering the widest-spread perturbation, by modification of the radiation diagram of an adaptive antenna of said interfering cell (61).

**Patentansprüche**

1. Verfahren zur Berechnung und Visualisierung gegenseitiger Interferenzen in absteigender Richtung, die in einem zellularen Mobilfunknetz mit Zugang vom Typ W-CDMA entstehen, das mit Hilfe eines EDV-Systems (1) umgesetzt wird, das Speichermittel (2), um vor allem Daten zu speichern, die für Karten (CN) der Netzabdeckung repräsentativ sind, Anzeigemittel, Mittel zur Auswahl (34) von Zellen des Netzes durch interaktive Schnittstellenmittel (3) und ein Berechnungsmodul (11) umfasst mit:

   - einem Auswahlschritt (50) mittels interaktiver Mittels (3) auf einer Anzeigevorrichtung einer Darstellung eines Arbeitsbereichs (6), die sich auf Daten von Karten (CN) stützt und der von einer Zellengruppe abgedeckt wird,
   - einem Auswahlschritt (51) auf den Anzeigemitteln durch Auswahlmittel (34) von Zellen einer Untergruppe von Zellen (61), die als interferent angesehen werden, beziehungsweise einer Untergruppe von Zellen (62), die als interferiert angesehen werden, aus beliebigen Zellen der Gruppe, die den dargestellten Arbeitsbereich (6) abdecken,
   - einem Eingabeschritt (52, 52') durch Konfigurationsmittel (33) von Schwellen niveaus für die Verhältnisse Signal/Interferenzen sowie zumindest eines Parameters, der sich auf die Leistung der interferenten Zellen (61) bezieht, eines Parameters für einen Übertragungskanal, den man untersuchen möchte, und eines Parameters für eine Kontur, die einen Berechnungsbereich im Arbeitsbereich (6) begrenzt,
   - einem Schritt (53) zur Bestimmung durch das Berechnungsmodul (11) des geografischen Bereichs, der von der Untergruppe der interferierten Zellen (61) bedient und als Servicebereich (63) bezeichnet wird, und zur Darstellung dieses Servicebereichs (63),
   - einem Schritt (54) zur Abschätzung durch das Berechnungsmodul der Überlappung jeder der interferenten Zellen (61) mit dem Servicebereich (63), um in den Speichermitteln (2) einen Überlappungsbereich (64) zu definieren und zu speichern,
   - einem Schritt (55) der Berechnung durch das Berechnungsmodul (11) des von der interferenten Zelle (61) empfangenen Feldstärkepegels beziehungsweise des von der interferierten Zelle (62) empfangenen Feldstärkepegels, die das entsprechende Pixel bedient, in jedem Punkt oder Pixel des Überlappungsbereichs (64),
   - einem Schritt zur Berechnung (55') durch das Berechnungsmodul (11) des interferenten Felds als Summe der von allen interferenten Zellen (61) empfangenen Feldern in jedem Punkt oder Pixel des Überlappungsbereichs (64),
   wobei das Berechnungsmodul für jedes Pixel des Überlappungsbereichs den Wert $I_{0\,voisine}$ des Interferenzfelds, das von jeder der interferenten Zellen für die Berechnung einer Matrix geschaffen wird, sowie die Summe der von allen interferenten Zellen geschaffenen Felder aus Dämpfungsdaten und der parametermäßig festgelegten Leistung der Zellen berechnet.

2. Verfahren nach Anspruch 1, wobei für jedes Pixel ausgehend von Feldstärkenpegeln und Parametern ein Schritt (56) der Abschätzung eines repräsentativen Werts des Verhältnisses Signal/Interferenzen durchgeführt wird.

3. Verfahren nach Anspruch 1 oder 2, wobei die sich auf den Übertragungskanal beziehenden Parameter den Durchsatz in dem Kanal, ein Ziel-Verhältnis Signal/Interferenzen und eine durchschnittliche Leistung pro Kanal umfassen.

4. Verfahren nach einem der Ansprüche 1 bis 3, wobei die Leistung der interferenten Zellen (61) für maximale Interferenzen parametriert ist, wenn die interferenten Zellen von einem Knoten B (4) des Netzes bedient werden, der mit voller Leistung sendet.

5. Verfahren nach einem der Ansprüche 1 bis 3, wobei die Leistung der interferenten Zellen (61) für minimale Interferenzen mit einer begrenzten Sendung im gemeinsamen CPICH-Pilotkanal der Basisstationen des Netzes parametriert ist.

6. Verfahren nach einem der Ansprüche 1 bis 5, wobei die Schwellenniveaus für die Verhältnisse Signal/Interferenzen von in einem Speicher (24) des EDV-Systems (1) gespeicherten Geomarketingdaten abhängen, die für eine gewünschte Servicequalität repräsentativ sind.

7. Verfahren nach einem der Ansprüche 2 bis 6, wobei durch einen Integrationsvorgang über den gesamten Überlappungsbereich (64) aller für jedes Pixel des Überlappungsbereichs (64) erhaltenen Ergebnisse eine Interferenzmatrix (31) gebildet wird, wobei das Berechnungsmodul (11) die allgemeine Rauschrate Tbi/j jeder der bedienenden interferierten Zellen (62) durch die interferenten Zellen (61) bestimmt.

8. Verfahren nach einem der Ansprüche 1 bis 7, wobei das Verhältnis $Eb/N_0$ der durchschnittlichen Leistung des Signals über der durchschnittlichen spektralen Dichte des Rauschens vom Berechnungsmodul (11) in jedem Pixel des Überlappungsbereichs (64) gemäß folgender Formel berechnet wird:

$$Eb/N_0 = Ec/I_0 + \text{Spreizungsgewinn},$$

wobei $I_0$ der Gesamtwert des Interferenzfelds ist mit $I_0 = \Sigma\ I_{0\ voisine} + \text{thermisches Rauschen} + I_{0\ serveuse}$, $Ec$ der Wert der durchschnittlichen Leistung des Signals der bedienenden Zelle für das Pixel ist, $I_{0\ serveuse}$ der Wert des Interferenzfelds der bedienenden Zelle ist und der Spreizungsgewinn dem Wert des Durchsatzes des parametermäßig ausgewählten Kanals entspricht, wobei die Werte für $Ec$ und $I_{0\ serveuse}$ zuvor vom Berechnungsmodul (11) aus den Dämpfungsdaten und der parametermäßig für diese Zelle festgelegten Leistung bestimmt wurden.

9. Verfahren nach einem der Ansprüche 7 bis 8, wobei die Vergleichsmittel dem Berechnungsmodul (11) gestatten, mindestens drei interferente Zellen (61) auszuwählen, die durch Vergleich der Werte der Interferenzmatrix (31) die am stärksten rauschenden Zellen darstellen.

10. Verfahren nach einem der Ansprüche 8 oder 9, wobei ein Anzeigeschritt in jedem Pixel des Wertes des Verhältnisses $Eb/N_0$ der durchschnittlichen Leistung des Signals über der durchschnittlichen spektralen Dichte des Rauschens für die interferierten Zellen (62) des Überlappungsbereichs (64) mittels interaktiver Schnittstellenmittel (3) durchgeführt wird, wobei durch Verwendung einer speziellen grafischen Darstellung für die Pixel einer bedienenden interferierten Zelle (62), deren Verhältnis $Eb/N_0$ unterhalb eines parametermäßig für die bedienende interferierte Zelle (62) eingegebenen Schwellenwerts des Verhältnisses Signal/Interferenzen liegt, Stör-Unterbereiche (60) festgelegt werden.

11. Verfahren nach einem der Ansprüche 8 bis 10, wobei das Berechnungsmodul (11) in jedem Pixel des Überlappungsbereichs (64) das Verhältnis $Eb/N_0$ oder $Ec/I_0$ bestimmt, wobei dieses Verhältnis in jedem Pixel des Servicebereichs (63) auf einer parametermäßig angegebenen Schwelle derart verglichen wird, dass für jedes Paar interferente Zelle (61) - bedienende interferierte Zelle (62) ein Wert berechnet wird, der für die überschüssige Leistung der interferenten Zelle (61) repräsentativ ist, wobei dieser Wert in eine Matrix übertragen wird.

12. Verfahren nach einem der Ansprüche 8 bis 10, wobei das Berechnungsmodul (11) in jedem Pixel des Überlappungsbereichs (64) das Verhältnis $Eb/N_0$ oder $Ec/I_0$ bestimmt, wobei dieses Verhältnis in jedem Pixel des Servicebereichs (63) mit einer parametermäßig angegebenen Schwelle derart verglichen wird, dass für jede interferierte Zelle (61) ein Wert berechnet wird, der für die Störung innerhalb der interferierten Zelle (61) repräsentativ ist, wobei der Wert von $I_0$ gleich der Summe der Interferenzen ist, die von den interferenten Zellen erzeugt werden.

13. Verfahren nach einem der Ansprüche 9 bis 12, wobei das berechnete Ergebnis der Störung verwendet wird, um durch Änderung des Strahlungsdiagramms einer adaptiven Antenne der Zelle eine Leistungskontrolle für zumindest die am meisten rauschende Zelle durchzuführen, um das Verhältnis Signal/Interferenzen in dieser Zelle zu erhöhen.

14. EDV-System (1) zur Berechnung und Visualisierung gegenseitiger Interferenzen in absteigender Richtung, die in einem zellularen Mobilfunknetz mit Zugang vom Typ W-CDMA entstehen, zur Umsetzung eines Verfahrens nach einem der Ansprüche 1 bis 13, das Speichermittel (2), ein Berechnungsmodul (11) und Auswahlmittel (12) aufweist, wobei die Speichermittel (2) in einem ersten Speicher (21) Daten aufweisen, die für geografische Karten (CN) repräsentativ sind, die gemäß der Unterteilung des Netzes in eine Vielzahl von Punkten oder Pixel unterteilt sind, und in einem zweiten Speicher (22) Daten, die für eine netzbezogene Funkabdeckung repräsentativ sind, wobei das System (1) **dadurch gekennzeichnet ist, dass** es umfasst:

- interaktive Schnittstellenmittel (3) zwischen dem Benutzer und dem System (1), die mit den Auswahlmitteln (12) verbunden sind, um mindestens einen Arbeitsbereich (6) auszuwählen und anzuzeigen, der aus den Daten von Karten (CN) hervorgegangen ist und von einer Gruppe von Zellen mit Funkabdeckung abgedeckt wird, die gemäß einer Anordnung, die von den Daten des zweiten Speichers (22) definiert wird, angeordnet sind,
- Konfigurationsmittel (33, 34), die durch die interaktiven Mittel (3) auswählbar sind, um in einer Konfigurationsdatei (25) des Systems (1) ausgehend von beliebigen Zellen der Gruppe, die den Arbeitsbereich (6) abdeckt, eine erste Untergruppe von Zellen (61) zu speichern, die als interferent zu betrachten sind, und eine zweite Untergruppe von Zellen (62), die als interferiert zu betrachten sind, wobei die Konfigurationsmittel (33) einerseits die Definition von Schwellen niveaus für die Verhältnisse Signal/Interferenzen sowie der Parameter erlauben, die sich auf die Leistung der interferenten Zellen (61), auf den Übertragungskanal, den man untersuchen möchte und auf die Kontur, die einen Berechnungsbereich im Arbeitsbereich (6) begrenzt, beziehen, und andererseits das Speichern dieser Daten in einer Konfigurationsdatei (25), wobei das Berechnungsmodul (11) Mittel zur Bestimmung des Servicebereichs (63) umfasst, der von der Untergruppe der interferierten Zellen (62) bedient wird, Mittel zur Abschätzung der Überlappung jeder der interferenten Zellen (61) mit dem Servicebereich (63), um in einem Speicher (23) der Speichermittel (2) einen Überlappungsbereichs (64) zu definieren und zu speichern, und Mittel zur Berechnung der Dämpfung der interferenten Zelle (61) an jedem Punkt oder Pixel des Überlappungsbereichs (64) beziehungsweise der Dämpfung der bedienenden interferierten Zelle (62) für das entsprechende Pixel.

**15.** System nach Anspruch 14, wobei das Berechnungsmodul (11) mit Mitteln zur Extraktion (13) der Daten aus der Konfigurationsdatei (25) und der repräsentativen Daten der in einem dritten Speicher (26) der Speichermittel (2) gespeicherten Dämpfungen verbunden ist, wobei das Berechnungsmodul (11) ausgehend von den in dem dritten Speicher (26) gespeicherten Dämpfungen und den Parameter der Konfigurationsdatei (25) in jedem Pixel des Überlappungsbereichs (64) einen Wert bestimmt, der für das Verhältnis Signal/Interferenzen repräsentativ ist.

**16.** System nach Anspruch 14 oder 15, wobei die interaktiven Schnittstellenmittel (3) Mittel umfassen, um in jedem Pixel des Überlappungsbereichs (64) den Wert anzuzeigen, der für das Verhältnis Signal/Interferenzen $Eb/N_0$ der durchschnittlichen Leistung des Signals über der durchschnittlichen spektralen Dichte des Rauschens repräsentativ ist, und Mittel, um für jede bedienende interferierte Zelle (62) der Stör-Unterbereiche (60), die von speziellen Pixeln repräsentiert werden, deren Verhältnis $Eb/N_0$ unter einem Schwellenniveau des Verhältnisses Signal/Interferenzen liegt, das parametermäßig für die bedienende interferierte (62) Zelle erfasst ist, zu repräsentieren.

**17.** System nach einem der Ansprüche 14 bis 16, **dadurch gekennzeichnet, dass** es Mittel zur Fernsteuerung aufweist, um in mindestens der interferenten Zelle (61), die die breiteste Störung verursacht, durch Änderung des Strahlungsdiagramms einer adaptiven Antenne der interferenten Zelle (61) die Leistung zu steuern.

**Fig. 1**

**Fig. 2**

| | Cell 1 | Cell j | Cell n |
|---|---|---|---|
| Cell B1 | Tb1/1 | Tb1/j | Tb1/n |
| Cell B2 | Tb2/1 | | |
| Cell Bi | Tbi/1 | | |
| Cell Bm | Tbm/1 | | |

**Fig. 3**

Fig. 4

Fig. 5

**EP 1 465 447 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1465447 A